# EUROPEAN PATENT APPLICATION

(11) **EP 4 776 400 A1**
(43) Date of publication of application: **15.07.2026**
(21) Application number: 25150983.2
(22) Date of filing: 09.01.2025
(51) Int. Cl.: H01M 50/209, H01M 50/24, H01M 50/251, H01M 50/289, H01M 10/06, H01M 50/60

(54) **BATTERY STORAGE ARRANGEMENT AND METHOD FOR CATCHING ELECTROLYTE**

(71) Applicant: ABB SCHWEIZ AG, 5400 Baden (CH)
(72) Inventor: HE, Minglong, 4310 Rheinfelden (CH); MARIUCCI, Giacomo, 6900 Lugano (CH)
(74) Representative: Maiwald GmbH

(57) **Abstract**

The invention relates to a battery storage arrangement (100) comprising a support structure (102) including at least one first battery monobloc reception (110) for receiving at least one battery monobloc, and a layer of sheet (116) being configured to be arranged at a side of the at least one battery monobloc (108) for catching electrolyte leaking from a battery monobloc of the battery monobloc.

## Description

### Technical Field

The invention relates to a battery storage arrangement such as a battery rack or a UPS cabinet, a method for catching electrolyte escaping from battery monoblocs, and a use of a layer of sheet to catch a liquid and/or gaseous electrolyte escaping from a battery monobloc.

### Background

The venting or leakage of aqueous UPS batteries results in the spread of conductive electrolyte inside the battery rack, which can further cause the electrical short, arc, and finally energic thermal runaway. The incident of one battery will propagate to the other batteries. In the end, it will not be a failure of individual batteries inside the UPS cabinet. Currently, no mitigation solutions are available for handling the venting and thermal runaway propagation for aqueous UPS batteries. In contrast to Li-ion electrolyte, aqueous batteries contain electrically conductive electrolyte. The spread of electrically conductive electrolyte during venting or leakage issues due to manufacturing defects are not controlled. Even with a proper insulation, the risk of direct shorts between two bus bars cannot be ruled out.

### Summary

There may be a desire to provide an improved battery storage arrangement.

The problem is solved by the subject-matter of the independent claims. Embodiments are provided by the dependent claims, the following description and the accompanying figures.

The described embodiments similarly pertain to the battery storage arrangement, the method for catching electrolyte escaping, for example, leaking or venting, from battery monoblocs, and the use of a layer of sheet to catch electrolyte leaking from a battery monobloc. Synergetic effects may arise from different combinations of the embodiments although they might not be described in detail.

Technical terms are used by their common sense. If a specific meaning is conveyed to certain terms, definitions of terms will be given in the following in the context of which the terms are used.

According to a first aspect, a battery storage arrangement is provided that comprises a support structure including at least a first battery monobloc reception for receiving at least one battery monobloc, and a layer of sheet being configured to be arranged at a side of the at least one battery monobloc for catching electrolyte escaping from a battery monobloc of the battery monobloc.

The support structure may consist, for example, of a housing with trays that can be moved into or out of the housing. The tray may comprise means to hold, to fix or to align battery monoblocs. The tray including the holding or fixing means are denominated herein as "battery monobloc receptions".

The batteries addressed herein are in particular aqueous-based batteries, which are less flammable. However, the electrolyte of the aqueous-based batteries is conductive. Caused by heat, venting of a battery occurs, which is triggered by the continuous pressure buildup inside the battery cell housing, for example, when reaching a certain pressure threshold. When the vent occurs, liquid electrolyte, electrolyte vapor, flammable gases from degradation reactions, and also solid battery materials may be pushed out.

Usually, a battery storage arrangement has several such battery monobloc receptions, which may be arranged above each other and/or next to each other. For example, the battery storage arrangement may include at least a first battery monobloc reception and a second battery monobloc reception above the first battery monobloc reception. Each of the first and the second battery monobloc receptions are then configured to receive one or more battery monoblocs. The layer of sheet may be arranged at any side of a monobloc, preferably at a side where electrolyte may escape. The battery monobloc receptions may have a distance from each other such that such that a gap is formed in between the battery monoblocs that are arranged on the first and second receptions, respectively. The layer of sheet is then in the gap. Additionally, a layer of sheet can be arranged above the battery monoblocs of the upper or top second reception and/or a layer of sheet can be arranged below the battery monoblocs of the lower or bottom first reception, or at any other side such as left and right sides or a front and back sides.

According to an embodiment, the layer of sheet is configured to absorb leaked or vented electrolyte, to block the thermal propagation between adjacent battery monoblocs and/or to provide electrical insulation between adjacent battery monoblocs.

The material of the layer of sheet may be adapted to absorb leaked liquid, vaporous and/or gaseous electrolyte and may also catch escaping solid material of the battery. Further, the layer of sheet may be adapted to impede the spreading of heat between the battery monoblocs and to provide electrical insulation between adjacent battery monoblocs. The layer of sheet is therefore also referred to as "electrical and thermal insulation layer".

According to an embodiment, the layer of sheet contains desiccant for absorbing the electrolyte.

The desiccant may be, for example, in form of a gel or powder, such as silica gel or alumina, or molecular sieve. However, the material shall preferably be non-conductive. The sheet may have a three-dimensional structure that can be filled with the desiccant. As another option, the sheet contains an adhesive to which the desiccant is applied. The sheet may be composed of, for example, a fleece that changes its colour when it gets humid.

According to an embodiment, the desiccant is a superabsorbent polymer.

A superabsorbent polymer (SAP), which is also known as slush powder, is a liquid-absorbing hydrophilic homopolymer or copolymer that can absorb and retain extremely large amounts of a liquid relative to its own mass. When absorbing the liquid, the SAP turns into a gel. Super Absorbent Polymer materials are, for example, Poly(sodium acrylate) and Polyacrylic Acid (PAA) Derivatives, Crosslinked Polyacrylamides, Copolymers of Acrylamide and Acrylate, Grafted Starch-Polyacrylate Copolymers and Carboxymethylcellulose (CMC) Derivatives (Crosslinked).

According to an embodiment, the layer of sheet comprises ditches configured to catch liquid electrolyte. The battery storage arrangement may further comprise a vertical drainage channel in communication with the ditches configured to collect the liquid electrolyte from the ditches and to guide the liquid electrolyte to a drainage. The drainage may be configured to exhaust the liquid electrolyte to the outside of the battery storage arrangement.

In this way, the liquid escaping from the battery is collected and drained off.

According to an embodiment, the drainage channel comprises a humidity sensor to detect and indicate that liquid is escaping from one or more battery monoblocs.

The humidity sensor may be, for example, a mechanical, chemical or an electronic sensor that is configured to detect liquid or condensed electrolyte and to indicate the presence of humidity or liquid, for example, optically, acoustically or by transmitting a signal.

According to an embodiment, the layer of sheet comprises at least one vent channel configured to receive electrolyte from openings of the battery monoblocs and to guide and exhaust the gaseous electrolyte to the outside of the battery storage arrangement.

The vent channel may be made of a rigid material on which additionally absorbing material may be applied or may be made itself of an electrolyte absorbing material. The at least one vent channel may be located along vent openings, thereby, for example, connecting the openings that lie in a row, and is configured to guide the electrolyte exhaust from the UPS cabinet without impacting the other monoblocs. The vent openings may be located at any side of the single battery cells or monoblocs.

According to an embodiment, the vent channel comprises a gas sensor configured to detect exhausting gaseous electrolyte.

Similar to the humidity sensor, the gas sensor may be, for example, a chemical or an electronic sensor that is configured to detect gaseous electrolyte and to indicate the presence of gaseous electrolyte, for example, optically, acoustically or by transmitting a signal.

According to an embodiment, the vent channel comprises a membrane at an end of the vent channel configured to let the gaseous electrolyte pass the vent channel.

The vent channel may be configured to letting pass only gaseous electrolyte to the outside and to impede that liquid electrolyte runs into further parts of the battery storage arrangement. The liquid electrolyte may be caught by the layer of sheet at or in the vent channels. That is, in embodiments, the vent channels may comprise SAP or similar liquid absorbing material.

According to an embodiment, the layer of sheet comprising the at least one vent channel comprises side walls, wherein the layer of sheet including the side walls enclose one or more monoblocs.

The term "enclose" is also used here for enclosing two or three sides of the monobloc(s), that is, not enclosing the monobloc completely. In particular, the film layer can be positioned around the battery cells or monoblocs so that no electrolyte escapes but is collected by the layer of sheet. The arrangement comprising the vent channel that possibly includes side walls is also referred to as "vent channel support structure" in this disclosure.

According to an embodiment, the battery storage arrangement includes at least a first and a second battery monobloc.

The battery monoblocs may be arranged matrix-like such that layers of sheet as described herein can be arranged between the rows and/or columns of the matrix of battery monoblocs. Additional layers of sheet can be arranged at any outer side, e.g., below, and above the matrix or at a front side or back side.

According to an embodiment, the battery monoblocs are aqueous-based batteries, preferably Ni-Zn, or lead acid batteries.

Examples of lead-acid batteries are:
- Zinc-Nickel Batteries
- Nickel-Cadmium (Ni-Cd) Batteries
- Nickel-Metal Hydride (Ni-MH) Batteries
- Aqueous Sodium-Ion Batteries
- Nickel-Iron (Ni-Fe) Batteries
- Aqueous Lithium-Ion Batteries
- Vanadium Redox Flow Batteries (VRFB)
- Iron-Air Batteries
- Copper-Zinc Batteries
- Manganese-Iron Batteries
- Zinc-Bromine Flow Batteries

This list is not exhaustive.

According to an embodiment, the battery storage arrangement is a battery rack or a UPS cabinet.

According to a further aspect, a method for catching electrolyte escaping from battery monoblocs is provided. The battery monoblocs are arranged in a battery storage arrangement as described herein, comprising the steps: providing a layer of sheet capable of receiving electrolyte from a battery monobloc, and placing the layer at a side of the monobloc.

The layer of sheet may further provide thermal and electrical insulation.

According to a further aspect, a use of a layer of sheet to catch a liquid and/or gaseous electrolyte leaking from a battery monobloc in a battery storage arrangement is proposed.

These and other features, aspects and advantages of the present invention will become better understood with reference to the accompanying figures and the following description.

### Short description of the Figures

Fig. 1 shows a diagram of a battery storage arrangement according to an embodiment.
Fig. 2 shows a diagram of a battery storage arrangement according to a further embodiment.
Fig. 3 shows a diagram of a sheet layer.
Fig. 4 shows a diagram of a drainage.
Fig. 5 shows a diagram of a ditch.
Fig. 6 shows a diagram of a venting channel.
Fig. 7 shows a diagram of the method for catching electrolyte leaking or venting from battery monoblocs.

### Detailed description of the Figures

Corresponding parts are provided with the same reference symbols in all figures.

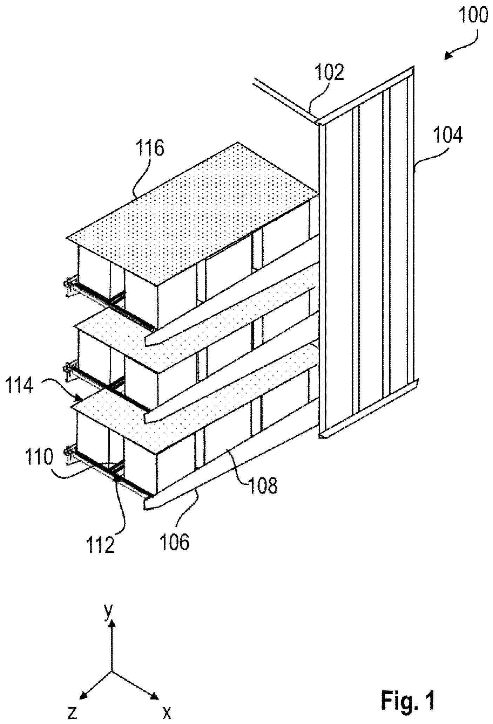

Fig. 1 shows a diagram of a battery storage arrangement 100 according to an embodiment. The battery storage arrangement 100 may be, as shown in the example, an UPS battery rack 100. The UPS battery rack 100 comprises a support structure 102, which again comprises a frame or housing 104, and trays 106 that may be pulled out and pushed back in again. The trays 106 comprise battery monobloc receptions 110 that receive the battery monoblocs 108. The battery monobloc receptions 110 are distant from each other so that two monoblocs can be placed adjacent to each other vertically (z) or in a plane in horizontal (x) direction. The battery monoblocs 108 in the horizontal (x) direction plane, i.e., which are placed in the example of Fig. 1 on the same tray 106 are denominated battery monobloc layer. The distance of the receptions is great enough to have at least a small gap 112 in x-direction and in y-direction. In between these gaps 112, 114, preferably between two battery monobloc layers, a layer of sheet 116 is inserted. However, the layers of sheet 116 may be arranged at any side of the battery monoblocs 108.

Preferably, the layer of sheet 116 contains desiccant for absorbing the electrolyte dissipating out of the battery monoblocs 108 during venting. The desiccant may be, for example, a superabsorbent polymer. The battery monoblocs 108 have an opening, e.g. a valve or vent disks from which electrolyte can escape. Vent disks are disks within the battery that have predetermined breaking points at which the disk breaks in case of an excessive pressure, resulting in a battery that is open at these points or in a portion between these points. These openings, which are referred to as "vents" in this disclosure are usual located at the top side, possibly near the edges of a housing of the battery monoblocs. The superabsorbent polymer absorbs the escaping electrolyte and solidifies to a gel-like consistency. The sheet layer 116 can then be easily replaced.

Further examples of suitable absorbing materials are Poly(sodium acrylate) and Polyacrylic Acid (PAA) Derivatives, Crosslinked Polyacrylamides, Copolymers of Acrylamide and Acrylate, Grafted Starch-Polyacrylate Copolymers and Carboxymethylcellulose (CMC) Derivatives (Crosslinked).

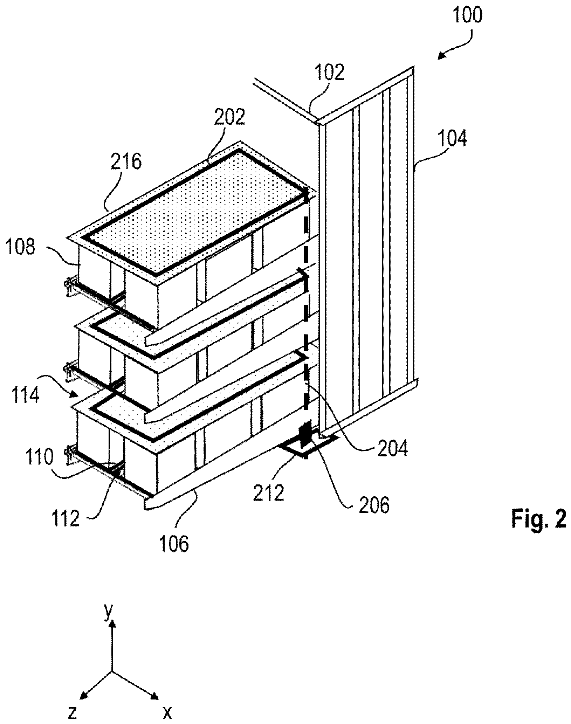

Fig. 2 shows a diagram of a battery storage arrangement 100 according to a further embodiment. The battery storage arrangement 100 in the example of Fig. 2 is again a UPS cabinet 100, with the support structure 102, the housing 104, and trays 106, on which battery monoblocs 108 are placed. In the gaps 114 between the battery monobloc layers, as an embodiment of the layer of sheet 116, an electrical and thermal insulation layer 216 is inserted, which comprises ditches 202 that guide the conductive electrolyte from the vent to a drainage channel 204, which again guides the electrolyte to a drainage 212, through which the conductive electrolyte can exit the battery storage arrangement 100. A humidity sensor 206 may be arranged at the drainage channel 204. Advantageously, the humidity sensor 206 is mounted at the bottom of the drainage channel 204 near the drainage 212. The layer of sheet (116, 216) may therefore be adapted to provide the following functionalities: electrolyte absorption, drainage, electrical insulation, or thermal insulation, or any combination of these functionalities.

The electrical and thermal insulation layer 216 may comprise more ditches 202 than shown in Fig. 2. For example, it may comprise additional ditches 202 in z-direction.

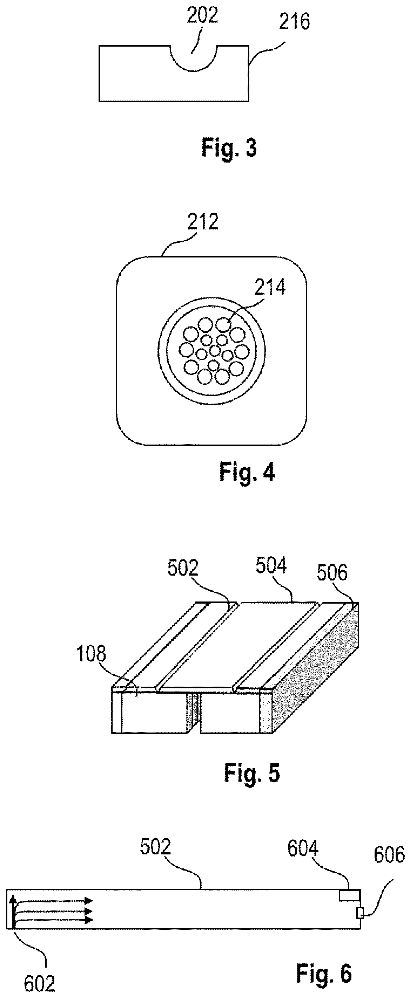

Fig. 3 shows a diagram of cut through a layer of sheet 216 with a ditch 202. The ditch 202 may be "U"-shaped as shown in Fig. 3, "V"-shaped, or rectangular "U-shaped". Since the liquid shall be conducted in the ditches 202, materials such as plastics, technical ceramics, or glass may be used, which are electrical insulators, and which also insulate thermally.

Fig. 4 shows a diagram of a drainage 212. The drainage 212 is arranged on the floor of the housing 104 and has one or more holes 214 through which the electrolyte can exit the battery storage arrangement 100.

Figs. 5 and 6 show diagrams illustrating a further option according to an embodiment. Vent channels 502 on top of vent openings 602 guide the electrically conductive electrolyte exhaust from the UPS cabinet 100 without impacting the other battery monoblocs 108. The vent channels 502 are inserted into a vent channel plate 504 of a vent channel support structure 504, 506. The vent channel support structure 504, 506 further comprises side walls 506 such that vent gas does not exit into the free space of the housing 104 but is caught by the vent channel support structure 504, 506. The vent channel 502 may further comprise a gas sensor 604 to sense if conductive electrolyte is present and a membrane 606 through which the conductive electrolyte can exit the vent channel 502.

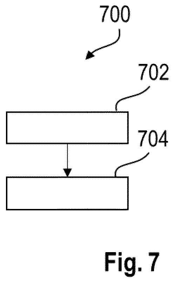

Fig. 7 shows a diagram of the method 700 for catching electrolyte leaking or venting from battery monoblocs 108, wherein the battery monoblocs 108 are arranged in a battery storage arrangement 100, comprising the steps: providing 702 a layer of sheet 116 capable of receiving electrolyte from a battery monobloc 108 and placing 704 the layer of sheet 116 at a side of the monobloc 108.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### Acronyms

- BESS: Battery Energy Storage System
- ESS: Energy Storage System
- SAP: Superabsorbent Polymers
- UPS: Uninterruptible Power Supply

### Reference Numerals

- 100: battery storage arrangement
- 102: support structure (housing + trays)
- 104: housing / frame
- 106: tray
- 108: battery monoblocs
- 110: battery monobloc reception
- 112: gap between battery monoblocs (horizontal)
- 114: gap between battery monoblocs (vertical)
- 116: layer of sheet / sheet
- 202: ditch for exhaust path
- 204: drainage channel
- 206: humidity sensor
- 212: drainage
- 214: holes of drainage
- 216: electrical and thermal insulation layer
- 502: vent channel
- 504: vent channel support structure: vent channel plate
- 506: vent channel support structure: side walls
- 602: vent, vent openings
- 604: gas sensor
- 606: membrane
- 700: method
- 702-704: method steps

## Claims

1. Battery storage arrangement (100), comprising
a support structure (102) including at least one first battery monobloc reception (110) for receiving at least one battery monobloc; and
a layer of sheet (116) being configured to be arranged at a side of the at least one battery monobloc (108) for catching electrolyte leaking from a battery monobloc of the battery monobloc.

2. Battery storage arrangement (100) according to claim 1, wherein the layer of sheet (116) is configured to absorb leaked or vented electrolyte, to block the thermal propagation between adjacent battery monoblocs and/or to provide electrical insulation between adjacent battery monoblocs.

3. Battery storage arrangement (100) according to claim 1 or 2, wherein the layer of sheet (116) contains desiccant for absorbing the liquid electrolyte.

4. Battery storage arrangement (100) according to claim 3, wherein the desiccant is a superabsorbent polymer.

5. Battery storage arrangement (100) according to any one of the previous claims, wherein the layer of sheet (116) comprises ditches configured to catch liquid electrolyte; and wherein the battery storage arrangement (100) comprises further
a vertical drainage channel (204) in communication with the ditches (202) configured to collect the liquid electrolyte from the ditches and to guide the liquid electrolyte to a drainage (212); and
the drainage (212) configured to exhaust the liquid electrolyte to the outside of the battery storage arrangement (100).

6. Battery storage arrangement (100) according to the previous claim, wherein the drainage channel comprises a humidity sensor.

7. Battery storage arrangement (100) according to any one of the previous claims, wherein the layer of sheet (116) comprises at least one vent channel (502) configured to receive electrolyte from openings of the battery monoblocs (108) and to guide and exhaust the electrolyte to the outside of the battery storage arrangement (100).

8. Battery storage arrangement (100) according to the previous claim, wherein the vent channel (502) comprises a gas sensor configured to detect exhausting gaseous electrolyte.

9. Battery storage arrangement (100) according to claim 7 or 8, wherein the vent channel (502) comprises a membrane (606) at an end of the vent channel (502) configured to let the gaseous electrolyte pass the vent channel (502).

10. Battery storage arrangement (100) according to any one of claims 7 to 9, wherein the layer of sheet (116) comprising the at least one vent channel (502) comprises side walls (506), wherein the layer of sheet (116) including the side walls (506) enclose one or more monoblocs (108).

11. Battery storage arrangement (100) according to any one of the previous claims, wherein the battery storage arrangement (100) includes at least a first and a second battery monobloc (108).

12. Battery storage arrangement (100) according to the previous claim, wherein the battery monoblocs (108) are aqueous-based batteries, preferably lead acid or Ni-Zn batteries.

13. Battery storage arrangement (100) according to any one of the previous claims, wherein the battery storage arrangement (100) is an ESS, a BESS, a battery rack or a UPS cabinet.

14. Method for catching electrolyte escaping from battery monoblocs (108), wherein the battery monoblocs are arranged in a battery storage arrangement (100) according to claim 1, comprising the steps:
providing (702) a layer of sheet capable of receiving electrolyte from a battery monobloc; and
placing (704) the layer of sheet (116) at a side of the monobloc.

15. Use of a layer of sheet (116) to catch a liquid and/or gaseous electrolyte escaping from a battery monobloc (108) in a battery storage arrangement (100).
